Europäisches Patentamt

European Patent Office

Office européen des brevets

(19)

(11) Veröffentlichungsnummer : **0 054 153**
**B1**

(12) # EUROPÄISCHE PATENTSCHRIFT

(45) Veröffentlichungstag der Patentschrift :
**13.06.84**

(21) Anmeldenummer : **81108856.6**

(22) Anmeldetag : **24.10.81**

(51) Int. Cl.³ : **C 08 F 14/06, C 08 L 27/06**

(54) **Verfahren zur Suspensionspolymerisation von Vinylchlorid und Verwendung der so hergestellten Polymerisate.**

(30) Priorität : **11.12.80 DE 3046652**

(43) Veröffentlichungstag der Anmeldung :
**23.06.82 Patentblatt 82/25**

(45) Bekanntmachung des Hinweises auf die Patenterteilung : **13.06.84 Patentblatt 84/24**

(84) Benannte Vertragsstaaten :
**BE CH FR GB IT LI NL**

(56) Entgegenhaltungen :
**DE-A- 1 645 668**

(73) Patentinhaber : **CHEMISCHE WERKE HÜLS AG
Postfach 1320
D-4370 Marl 1 (DE)**

(72) Erfinder : **Kahanek, Herbert, Dr.
Gersthofener Strasse 12
D-4370 Marl (DE)**
Erfinder : **Stiller, Joachim
Amselweg 6
D-4421 Reken 2 (DE)**

Jouve, 18, rue St-Denis, 75001 Paris, France

EP 0 054 153 B1

## Beschreibung

Es ist bekannt, die Viskosität von Dispersionen aus Emulsionspolymerisaten von Vinylchlorid und Weichmachern durch Zusatz von Suspensions-Polyvinylchlorid zu erniedrigen.

So läßt sich beispielsweise gemäß der DE-PS 16 45 668 ein für diesen Zweck geeignetes Suspensions-Polyvinylchlorid erhalten, wenn man die Suspensionspolymerisation in Gegenwart von Methylhydroxipropylcellulosen, die in 2 gewichtsprozentiger wäßriger Lösung eine Viskosität von etwa 100 cP/20 °C aufweisen, als einzigem Dispergiermittel und unter Verwendung von monomerlöslichen Katalysatoren durchführt. Man erhält nach diesem Verfahren zwar ein Suspensions-Polyvinylchlorid, welches die Viskosität von Plastisolen aus pastenfähigem Polyvinylchlorid und Weichmachern erniedrigt, jedoch ist dieser Effekt noch verbesserungswürdig.

Es wurde nun gefunden, daß sich ein wesentlich besserer Effekt erzielen läßt durch ein Verfahren zur Suspensionspolymerisation von Vinylchlorid in Gegenwart von Methylhydroxipropylcellulose, die in 2 gewichtsprozentiger wäßriger Lösung eine Viskosität von 50 bis 500 mPa · s (cP)/20 °C aufweist, als Suspensionsstabilisator, und in Gegenwart monomerlöslicher Katalysatoren, das dadurch gekennzeichnet ist, daß vor dem Aufheizen auf Polymerisationstemperatur der gesamte Polymerisationsansatz 5 bis 10 Stunden normal gerührt oder aber homogenisiert wird, sowie Verwendung des so hergestellten Polymerisates zur Erniedrigung der Viskosität von Dispersionen aus pastenfähigem Polyvinylchlorid, das in Gegenwart von ionogenen Emulgatoren hergestellt wurde, und Weichmachern.

Die Homogenisierung kann durch bekannte Mittel bewerkstelligt werden, beispielsweise indem man die Mischung vor dem Aufheizen auf Polymerisationstemperatur mit Geräten behandelt, die geeignet sind, eine innige Dispergierung herbeizuführen. Beispiele für solche Mittel sind Dispergierpumpen, hochtourige Rührer, sonstige hochtourige Pumpen usw. Auch 5- bis 10 stündiges Rühren des Ansatzes vor der Polymerisation mit Drehzahlen, die bei einer normalen Suspensionspolymerisation üblich sind und etwa einer Umfangsgeschwindigkeit des Rührers von 5 bis 10 m/sek entsprechen, führt zum Ziel. Darüber hinausgehende Umfangsgeschwindigkeiten sind zwar möglich, erscheinen jedoch nicht technisch sinnvoll. Ein 10 Stunden übersteigendes Rühren ist zwar möglich, verbessert das Ergebnis jedoch nicht fühlbar.

Die erfindungsgemäße Herstellung und Verwendung solcher feinkörnigen Polymerisate ist nicht nur auf die Polymerisate von reinem Vinylchlorid beschränkt, gegebenenfalls können bis zu 25 Gewichtsprozent, bezogen auf das Gewicht des Vinylchlorids, an mit Vinylchlorid mischpolymerisierbaren Vinyl- und/oder Acrylverbindungen, insbesondere Vinylacetat, mitverwendet werden.

Als Polymerisationskatalysatoren können alle monomerlöslichen Substanzen eingesetzt werden, die üblicherweise als Katalysatoren für die Suspensionspolymerisation von Vinylchlorid geeignet sind, also Diacyl- und Dialkylperoxide, wie z. B. Dilauroyl- und Dibenzoylperoxid, Percarbonate, wie z. B. Dimyristyl- und Dicetylpercarbonat, Percarbonsäureester, wie z. B. tert.-Butylperpivalat, gemischte Anhydride von organischen Sulfopersäuren mit organischen Säuren, wie z. B. Acetylcyclohexansulfonylperoxid, sowie als Polymerisationskatalysatoren bekannte Azoverbindungen, wie z. B. 2,2'-Azo-bis-isobutyronitril. Es können auch Gemische dieser Substanzen verwandt werden. Sie können in Mengen von 0,001 bis 1 %, vorzugsweise 0,01 bis 0,2 %, verwendet werden.

Als Dispergiermittel wird Methylhydroxipropylcellulose, die in 2 gewichtsprozentiger wäßriger Lösung eine Viskosität von 50 bis 500 cP/20 °C, vorzugsweise 80 bis 120, insbesondere 90 bis 110 cP/20 °C, aufweist, eingesetzt. Sie wird in Mengen von 0,01 bis 3 %, vorzugsweise 0,1 bis 1 %, angewandt.

Weiterhin können dem Suspensions-Polymerisationsansatz übliche Hilfsstoffe zugegeben werden, wie z. B. Substanzen zur Einstellung bestimmter pH-Werte (Natriumcarbonat, Natriumbicarbonat, Calciumcarbonat u. ä.) Molekulargewichtsregler (z. B. Chlorkohlenwasserstoffe, wie Trichlorethylen) oder Stabilisatoren.

Die Polymerisationstemperatur für die Suspensionspolymerisation liegt im üblichen Bereich von 30 bis 70 °C ; die Rührgeschwindigkeit sollte sich in den üblichen Bereichen von 3 bis 10 m/sek Umfangsgeschwindigkeit bewegen.

Die verpastbaren Polyvinylchlorid-Polymerisate, deren Pastenviskosität durch Zusatz der o. a. Suspensionspolymerisate gesenkt werden soll, können durch übliche und bekannte Methoden, wie sie beispielsweise in der Monographie von Kainer,. Polyvinylchlorid und Vinylchlorid-Mischpolymerisate, Springer-Verlag (1965), Seite 34 ff. beschrieben sind, hergestellt werden.

Die erfindungsgemäß einzusetzenden Suspensionspolymerisate und die verpastbaren Polyvinylchlorid-Polymerisate können im Verhältnis 1 : 20 bis 2 : 1, vorzugsweise 40 : 60 bis 60 : 40, gemischt und zur Pastenherstellung herangezogen werden. Zur Herstellung der Pasten (Plastisole) kann man sich bekannter Methoden bedienen, wie sie beispielsweise in der o. a. Monographie von Kainer auf Seite 343 beschrieben werden.

Dabei können in Plastisolen übliche Zusätze, wie Stabilisatoren, Farbstoffe, Pigmente und Füllstoffe, mitverwendet werden.

Als Weichmacher können alle monomeren und polymeren Verbindungen, die üblicherweise als Weichmacher für Polyvinylchlorid und dessen Mischpolymerisate verwendet werden (vgl. H. Gnamm — W. Sommer, Die Lösungsmittel und Weichmachungsmittel, Stuttgart 1958, Seiten 589 bis 735), eingesetzt werden. Bevorzugt sind vollständig veresterte Di- und Tricarbonsäuren sowie vollständig veresterte mehrwertige anorganische Säuren, wie Di-n-butylphthalat, Di-2-ethylhexylphthalat, Diethylsebacat, Triethylcitrat oder Trikresylphosphat.

In Plastisolen werden die Weichmacher in Mengen von 15 bis 100 Gewichtsprozent, vorzugsweise von 15 bis 60 Gewichtsprozent, bezogen auf die Polymerisate, angewandt.

Zur weiteren Erläuterung der erfindungsgemäßen Maßnahmen sollen die folgenden Beispiele dienen:

Beispiel 1

a) Herstellung des zur Pastenherstellung geeigneten Polyvinylchlorids

Eine Mischung aus 2 700 kg Vinylchlorid, 2 950 kg vollentsalztem Wasser, 4,86 kg Lauroylperoxyd, 27 kg Natriumalkylbenzolsulfonat (C-Schnitt: $C_{10}$ bis $C_{13}$), 27 kg Laurylalkohol und 15 g ethylendiamintetraessigsaurem Natrium wurden ca. 1 Stunde mechanisch homogenisiert und anschließend in einen vorher durch Evakuieren und Spülen mit Stickstoff sauerstofffrei gemachten Rührkessel von 6 000 l Inhalt eingefahren, auf 55 °C aufgeheizt und bei dieser Temperatur und unter ständigem Rühren 20 Stunden polymerisiert. Man erhielt nach dem Entspannen eine Dispersion mit 45 % Feststoffgehalt, die in üblicher Weise durch Sprühtrocknung aufgearbeitet wurde.

b) Herstellung des Suspensions-Polyvinylchlorids

In einem mit Edelstahl ausgekleideten Rührautoklaven von 7 m³ Inhalt, der mit einem Impellerrührer, einem Stromstörer und Temperaturregelanlage ausgestattet ist, werden 3 520 kg vollentsalztes Wasser, in welchem 3,3 kg (0,15 Gewichtsprozent, bezogen auf das Gewicht des VC's) Methylhydroxipropylcellulose, die in 2 gewichtsprozentiger wäßriger Lösung eine Viskosität von etwa 100 cP/20 °C aufweist, und 3,3 kg Natriumcarbonat gelöst sind, vorgelegt. Weiterhin werden 1,76 kg Lauroylperoxid eingetragen. Nach dem Schließen des Autoklaven und Spülen mit Stickstoff werden 2 200 kg Vinylchlorid eingefahren. Der Kesselinhalt wird nun 10 Stunden mit 120 UpM (Umfangsgeschwindigkeit m/sek) gerührt und anschließend bei der gleichen Rührgeschwindigkeit auf die Polymerisationstemperatur von 61 °C aufgeheizt. Nach etwa 13 Stunden ist die Polymerisation beendet und das Polymerisat wird durch Entgasen, Zentrifugieren und Trocknen gewonnen.

Zur Feststellung der durch dieses Polymerisat erzielbaren Viskositätserniedrigung einer Polyvinylchlorid-Paste werden jeweils 50 Gewichtsteile Emulsions-Polyvinylchlorid und 50 Gewichtsteile Suspensions-Polyvinylchlorid mit 38 Gewichtsteilen Dioctylphthtalat (DOP) und 2 Gewichtsteilen Stabilisator verrieben und die Viskosität der so entstandenen Paste in einem HAAKE-Rotovisko bei einer Schergeschwindigkeit von 0,3 sek⁻¹ gemessen. Nach einer Lagerung von 24 Stunden bei 25 °C weist die Paste eine Viskosität von 79 dPa · s (P) auf.

Beispiel 1a (Vergleichsbeispiel)

Dieser Versuch wird in demselben Rührautoklaven unter gleichen Bedingungen wiederholt, jedoch mit dem Unterschied, daß sofort nach dem Einfahren des Vinylchlorids und Anstellen des Rührers auf die Polymerisationstemperatur aufgeheizt wird, d. h. also ohne 10 stündiges Rühren bei Raumtemperatur.

Eine analog nach Beispiel 1 mit 50 Gewichtsteilen E-Polyvinylchlorid und 50 Gewichtsteilen dieses S-Polyvinylchlorids hergestellte und gemessene Paste weist unter den gleichen Bedingungen eine Viskosität von 222 dPa · s (P) auf.

Beispiel 2

Aus einem Druckbehälter wird eine kräftig gerührte Ansatzmischung, bestehend aus 3 240 kg vollentsalztem Wasser, 2 500 kg VC, 7,5 kg Methylhydroxipropylcellulose (0,3 Gewichtsprozent, bezogen auf das Gewicht des Vinylchlorids), 3,7 kg Natriumcarbonat und 2 kg Lauroylperoxid über eine Homogenisiermaschine (Supraton, Typ D 305/1582) in einem mit Edelstahl ausgekleideten Rührautoklaven von 7 m³ Inhalt gedrückt. Unter Rühren mit 120 UpM wird der Reaktorinhalt auf 61 °C aufgeheizt und bei dieser Temperatur die Polymerisation durchgeführt. Sie ist nach etwa 13 Stunden beendet. Das Polymerisat wurde durch Zentrifugieren und Trocknen gewonnen. Die Viskosität einer daraus analog Beispiel 1 hergestellten Paste beträgt 96 dPa · s (P).

Beispiel 2a (Vergleichsbeispiel)

Dieser Versuch wird in demselben Rührautoklaven unter denselben Bedingungen wiederholt, jedoch ohne die Mischung von Vinylchlorid und wäßriger Phase vor dem Polymerisieren zu homogenisieren.

Eine analog nach Beispiel 1 mit diesem Polymerisat hergestellte und gemessene Polyvinylchlorid-Paste weist eine Viskosität von 221 dPa · s (P) auf.

**Ansprüche**

1. Verfahren zur Suspensionspolymerisation von Vinylchlorid mit gegebenenfalls bis zu 25 Gew.-%, bezogen auf das Gewicht des Vinylchlorids, an mit diesen mischpolymerisierbaren Vinyl- und/oder Acrylverbindungen, in Gegenwart von Methylhydroxipropylcellulose, die in 2 gewichtsprozentiger wäßriger Lösung eine Viskosität von 50 bis 500 mPa · s (cP)/20 °C aufweist, als Suspensionsstabilisator und in Gegenwart von monomerlöslichem Katalysator, dadurch gekennzeichnet, daß vor dem Aufheizen auf Polymerisationstemperatur der gesamte Polymerisationsansatz 5 bis 10 Stunden normal gerührt oder aber homogenisiert wird.

2. Verfahren nach Anspruch 1, dadurch gekennzeichnet, daß die Methylhydroxipropylcellulose eine Viskosität von 80 bis 120 mPa · s (cP)/20 °C aufweist.

3. Verwendung von nach Anspruch 1 hergestelltem Suspensions-Polyvinylchlorid zur Erniedrigung der Viskosität von Dispersionen aus pastenfähigem Polyvinylchlorid, das in Gegenwart von ionogenen Emulgatoren hergestellt wurde.

**Claims**

1. A process for the suspension polymerisation of vinyl chloride, optionally together with up to 25 % by weight (based on the weight of vinyl chloride) of one or more copolymerisable vinyl and/or acrylic compounds, the polymerisation being carried out in the presence of methylhydroxypropyl-cellulose having a viscosity in a 2 % by weight aqueous solution of 50 to 500 mPa · s (cP) at 20 °C acting as a suspension stabiliser and in the presence of a monomersoluble catalyst, characterised in that before being heated to the polymerisation temperature the entire polymerisation charge is stirred for 5 to 10 hours in a normal manner or is otherwise homogenised.

2. A process according to claim 1, characterised in that the methyl-hydroxypropyl-cellulose has a viscosity of 80 to 120 mPa · s (cP) at 20 °C.

3. The use of a vinyl chloride suspension polymer produced according to claim 1 for reducing the viscosity of dispersions of paste-forming vinyl chloride polymers which are produced in the presence of ionic emulsifiers.

**Revendications**

1. Procédé de polymérisation de chlorure de vinyle en suspension, avec éventuellement jusqu'à 25 % en poids, relativement au poids du chlorure de vinyle, de composés vinyliques et/ou acryliques copolymérisables avec celui-ci, en présence de méthylhydroxypropyl-cellulose qui présente en solution aqueuse à 2 % en poids une viscosité de 50 à 500 mPa · s à 20 °C, comme stabilisant de suspension, et en présence d'un catalyseur soluble dans les monomères, caractérisé par le fait qu'avant le chauffage à la température de polymérisation, on agite normalement tout le mélange de polymérisation pendant 5 à 10 heures ou encore, qu'on l'homogénéise.

2. Procédé selon la revendication 1, caractérisé par le fait que la méthyl-hydroxypropyl-cellulose présente une viscosité de 80 à 120 mPa · s à 20 °C.

3. L'utilisation de polychlorure de vinyle de suspension, préparé selon la revendication 1, pour l'abaissement de la viscosité de dispersions de polychlorure de vinyle convertible en pâte, que l'on a préparé en présence d'émulsifiants ionogènes.